# EUROPEAN PATENT SPECIFICATION

(11) **EP 3 304 630 B1**
(45) Date of publication and mention of the grant of the patent: **27.11.2019**
(21) Application number: 16727794.6
(22) Date of filing: 01.06.2016
(51) Int. Cl.: H01M 8/243, H01M 8/04014

(54) **SOLID OXIDE FUEL CELL UNIT**
FESTOXID-BRENNSTOFFZELLENEINHEIT
UNITÉ DE PILE À COMBUSTIBLE À OXYDE SOLIDE

(30) Priority: 01.06.2015 GB 201509444
(43) Date of publication of application: 11.04.2018
(73) Proprietor: Adelan Limited, Shropshire TF9 4PY (GB)
(72) Inventor: KENDALL, Kevin, Market Drayton Shropshire TF9 4PY (GB)
(74) Representative: Barker Brettell LLP
(86) International application number: PCT/GB2016/051604
(87) International publication number: WO 2016/193720

(56) References cited:
- JP-A- 2004 335 277
- US-A- 3 377 203
- US-A1- 2005 074 648

## Description

### Field of the Invention

The present invention relates to a stackable solid oxide fuel cell unit comprising a stackable recuperator coupled with a tubular solid oxide fuel cell stack.

### Background to the Invention

Solid oxide fuel cells (SOFCs) are well known in the art. These types of fuel cell generate a direct electric current by reacting a fuel gas with an oxidant. SOFCs have an anode, an electrolyte and a cathode. The fuel cells can be made from a variety of solid oxide materials (e.g. they may be based on ceramics, such as zirconium oxide, ceria, gadolinia, or other oxide materials, and they may optionally be doped with a dopant, such as yttria, scandia, magnesia or calcia).

In addition, SOFCs may be provided in a variety of geometries, e.g. they may be provided as tubular SOFCs where each fuel cell is in the shape of a tube, or they may be provided as planar SOFCs where for each fuel cell the electrolyte is sandwiched in between the electrodes.

The electrolyte is normally a dense layer of ceramic that conducts oxygen ions. Suitable materials include yttria stabilized zirconia (YSZ) (e.g. the 8% form, Y8SZ), scandia stabilized zirconia (ScSZ) (e.g. the 9 mol% form of Sc₂O₃, 9ScSZ) and gadolinium doped ceria (GDC).

The ceramic anode layer may, for example, be a cermet (ceramic-metal composite) made up of nickel mixed with ceramic, such as the ceramic material that is used for the electrolyte in that particular cell, e.g. YSZ.

The cathode layer must be, at minimum, electronically conductive. Lanthanum strontium manganite (LSM) is often used. Composite cathodes consisting of LSM and YSZ have also been used. Mixed ionic/electronic conducting (MIEC) ceramics, such as the perovskite LSCF, can also be used.

Two or more SOFCs can be connected to form what is known as a solid oxide fuel cell stack. Combining individual cells into stacks is necessary to obtain useful power outputs.

A complete solid oxide fuel cell system typically includes, in addition to the solid oxide fuel cell stack, auxiliary subsystems for providing fuel gas and oxidant gas into the stack. The fuel gas is normally directed along and in contact with the anode of the fuel cell system, whilst an oxidizing gas, for example air or oxygen, is allowed to pass along and in contact with the cathode of the system. As a result, the fuel is oxidized, with the oxidizing gas being reduced, in order to generate electricity.

In solid oxide fuel cell systems the issue of heat management is critical. For example, document US 3,377,203 discloses an SOFC system comprising tubular fuel cells and a heat management system, in which heat-exchange between exhaust gas and incoming air takes place. A key component in SOFC systems is the recuperator. However, current recuperators represent a significant fraction of the overall cost of an SOFC system.

In addition, current recuperators are ineffective in managing heat within portable SOFC systems.

New tubular designs, such as microtubular solid oxide fuel cells, present many advantages, such as lower weight and volume, and rapid start-up due to high resistance to thermal shock. However, although the tubes in these cells are much lighter, the current recuperators used to preheat the incoming cathode air with the hot exhaust gas are relatively heavy and result in the overall product being less portable. A typical tubular SOFC system includes a planar recuperator and tubular SOFC stacks. It has been recognised by the present inventor that this makes the systems less useable in applications where portability is required, because the overall shape is awkward to handle, in addition to the relatively high weight of the recuperator making the overall system less portable.

It has also been recognised by the present inventor that when the solid oxide fuel cell stack is increased in size, by adding in more tubes, the recuperator has to be completely redesigned, which is inefficient.

It has therefore been recognised by the present inventor that it would be advantageous to have a new design of solid oxide fuel cell unit.

### Summary of the Invention

The invention provides, in a first aspect, a solid oxide fuel cell unit comprising:
a tubular solid oxide fuel cell stack comprising one or more solid oxide fuel cell tubes, each fuel cell tube having a first end configured to receive a fuel gas and a second end configured to discharge an exhaust gas, said tubular solid oxide fuel cell stack having an elongate axis, and
a recuperator comprising an elongate body that is made of an alloy or a metal, wherein said elongate body extends from a first end to a second end, with a passageway running therethrough, said elongate body having an elongate axis and having an outer cross section with a substantially consistent size and shape from the first end to the second end, wherein the elongate body has an outer shape that comprises flat surfaces on its outer shape and wherein the passageway provides (a) a coupling section extending from the first end of the elongate body, within which the tubular solid oxide fuel cell stack can be received so as to couple the recuperator with the tubular solid oxide fuel cell stack, with the second ends of the fuel cell tubes being located within the coupling section, and (b) an exhaust gas channel extending from the second end of the elongate body, through which, in use, exhaust gas from the second ends of the fuel cell tubes can flow and can exit the recuperator at the second end,
wherein 50% or more of the length of the tubular solid oxide fuel cell stack can be received within the coupling section of the recuperator,
wherein when the tubular solid oxide fuel cell stack is received within the coupling section of the recuperator, the elongate axis of the tubular solid oxide fuel cell stack is aligned with the elongate axis of the recuperator,
such that a stackable solid oxide fuel cell unit can be formed in which the recuperator is coupled with the tubular solid oxide fuel cell stack.

Within the tubular solid oxide fuel cell stack, when there is more than one solid oxide fuel cell tube, these solid oxide fuel cell tubes are preferably longitudinally aligned. In other words, each fuel cell tube has an elongate axis and these elongate axes of the fuel cell tubes are aligned. This stack of fuel cell tubes therefore has an outer cross section with a substantially consistent size and shape from the first ends of the fuel cell tubes to the second ends of the fuel cell tubes.

When the stackable solid oxide fuel cell unit is formed, in which the recuperator is coupled with the tubular solid oxide fuel cell stack, 50% or more of the length of the tubular solid oxide fuel cell stack is received within the coupling section of the recuperator. The recuperator has a cross section with a substantially consistent size and shape from its first end to its second end. This portion of the product is therefore sized and shaped to be stackable. Thus the coupled product can be readily stacked with another such coupled product. In particular, two or more such coupled products can be stacked in a longitudinally aligned fashion.

Further, as noted above, the stack of fuel cell tubes preferably has an outer cross section with a substantially consistent size and shape from the first ends of the fuel cell tubes to the second ends of the fuel cell tubes. This further aids with the stackability of the product.

However, the key feature for achieving the stackable units is that the recuperator has a cross section with a substantially consistent size and shape from its first end to its second end, and that the tubular solid oxide fuel cell stack is received within the coupling section of the recuperator. Thus the geometry of the recuperator, in its own right in terms of its exterior shape, and with respect to the size of the tubular solid oxide fuel cell stack so that this stack can be received within the recuperator, is technically relevant to the invention.

The invention provides, in a second aspect, a stackable solid oxide fuel cell unit comprising:
a tubular solid oxide fuel cell stack comprising one or more solid oxide fuel cell tubes, each fuel cell tube having a first end configured to receive a fuel gas and a second end configured to discharge an exhaust gas, said tubular solid oxide fuel cell stack having an elongate axis, and
a recuperator comprising an elongate body that is made of an alloy or a metal, wherein said elongate body extends from a first end to a second end, with a passageway running therethrough, said elongate body having an elongate axis and having an outer cross section with a substantially consistent size and shape from the first end to the second end, wherein the elongate body has an outer shape that comprises flat surfaces on its outer shape and wherein the passageway provides (a) a
coupling section extending from the first end of the elongate body, within which the tubular solid oxide fuel cell stack is received, so that the recuperator is coupled with the tubular solid oxide fuel cell stack, with the second ends of the fuel cell tubes being located within the coupling section, and (b) an exhaust gas channel extending from the second end of the elongate body, through which, in use, exhaust gas from the second ends of the fuel cell tubes can flow and can exit the recuperator at the second end,
wherein 50% or more of the length of the tubular solid oxide fuel cell stack is received within the coupling section of the recuperator, and
wherein the elongate axis of the tubular solid oxide fuel cell stack is aligned with the elongate axis of the recuperator.

It will be appreciated that the stackable solid oxide fuel cell unit of the second aspect may be considered as equivalent to the solid oxide fuel cell unit of the first aspect when the recuperator is coupled with the tubular solid oxide fuel cell stack.

Within the tubular solid oxide fuel cell stack, when there is more than one solid oxide fuel cell tube, these solid oxide fuel cell tubes are preferably longitudinally aligned. In other words, each fuel cell tube has an elongate axis and these elongate axes of the fuel cell tubes are aligned. This stack of fuel cell tubes therefore has an outer cross section with a substantially consistent size and shape from the first ends of the fuel cell tubes to the second ends of the fuel cell tubes.

Thus in the stackable solid oxide fuel cell unit of the second aspect, where 50% or more of the length of the tubular solid oxide fuel cell stack is received within the coupling section of the recuperator, the stackable solid oxide fuel cell unit can be readily stacked with another such stackable solid oxide fuel cell unit. This is because the recuperator has a cross section with a substantially consistent size and shape from its first end to its second end, and so this portion of the product is sized and shaped to be stackable. In particular, two or more such stackable solid oxide fuel cell units can be stacked in a longitudinally aligned fashion.

Further, as noted above, when there is more than one fuel cell tube, the stack of fuel cell tubes preferably has an outer cross section with a substantially consistent size and shape from the first ends of the fuel cell tubes to the second ends of the fuel cell tubes. This further aids with the stackability of the product.

The ability to stack the products of the invention together means that if more tubes are required, in order to increase the size (and thus power) of the fuel cell product, it is possible to simply stack together and connect two or more of the products to increase the size. It is not necessary to redesign any part of the product. There is flexibility to increase the size as desired by simply selecting a suitable number of products to stack together. It is therefore easy to produce a fuel cell system having the desired power.

For example, electrical power of from 5W to 500W or more can readily be provided by using the present invention.

In addition, because the products can stack together this is a more efficient use of space. It makes the fuel cell system more portable.

In a third aspect, therefore, the invention provides a stacked solid fuel cell system comprising two or more stackable solid oxide fuel cell units according to the second aspect.

Preferably in the third aspect the stackable solid oxide fuel cell units of the second aspect are stacked with their elongate axes aligned.

There may, for example, be from two to 100, or even more, of the stackable solid oxide fuel cell units stacked together.

The stacked units may be provided within a container, such as an insulating container.

This stacked solid fuel cell system is space efficient. It is therefore more readily portable.

The overall shape of the stacked solid fuel cell system is easy to handle.

A further benefit of the stacked solid fuel cell system of the invention is that any faulty solid oxide fuel cell units can easily be removed and replaced. Therefore maintenance of the system is straightforward. This also keeps maintenance costs low, as only the faulty part needs to be removed and replaced, rather than needing to take apart the full system.

Moreover, the weight of both the stackable solid oxide fuel cell units and the stacked solid fuel cell system can be minimized. Lightweight fuel cells can be built simply and economically using the present invention.

Likewise, the volume of both the stackable solid oxide fuel cell units and the stacked solid fuel cell system can be minimized.

Furthermore, the cost of both the stackable solid oxide fuel cell units and the stacked solid fuel cell system can be minimized.

In addition, the portability and usability of both the stackable solid oxide fuel cell units and the stacked solid fuel cell system can be increased.

In one embodiment, the stackable solid oxide fuel cell units and the stacked solid fuel cell system may be used in combination with a heat exchanger, to recover heat from the exhaust gases that exit the recuperator. Heat exchangers are of course known and used in the art and suitable heat exchangers for use with solid oxide fuel cells are well known and available.

Thus in one embodiment the stackable solid oxide fuel cell unit of the invention and/or the stacked solid fuel cell system of the invention further comprises a heat exchanger. The heat exchanger may, for example, be attached to the recuperator. Heat can readily be utilised from the exhaust gases by such a heat exchanger.

### Detailed description of the invention

The solid oxide fuel cell unit of the first aspect and the stackable solid oxide fuel cell unit of the second aspect each comprise a tubular solid oxide fuel cell stack. This stack comprises one or more solid oxide fuel cell tubes, each fuel cell tube having a first end configured to receive a fuel gas and a second end configured to discharge an exhaust gas, said tubular solid oxide fuel cell stack having an elongate axis.

Within the tubular solid oxide fuel cell stack, when there is more than one solid oxide fuel cell tube, these solid oxide fuel cell tubes are preferably longitudinally aligned. In other words, each fuel cell tube has an elongate axis and these elongate axes of the fuel cell tubes are aligned. This stack of fuel cell tubes therefore has an outer cross section with a substantially consistent size and shape from the first ends of the fuel cell tubes to the second ends of the fuel cell tubes.

The tubular SOFC stack comprises one or more tubular solid oxide fuel cells. It may comprise only one, or only two, tubular solid oxide fuel cells, or it may comprise more than one, e.g. more than two, tubular solid oxide fuel cells. It will be appreciated that the invention does not lie in the number of tubular solid oxide fuel cells in the tubular SOFC stack, but in the manner in which the tubular SOFC stack and recuperator can be coupled to form a unit that is stackable.

In one embodiment the tubular SOFC stack comprises three or more tubular solid oxide fuel cells, such as four or more.

In one embodiment the tubular SOFC stack comprises from 1 to 20 tubular SOFCs or from 2 to 20 tubular SOFCs, such as from 2 to 15 or from 2 to 12 or from 2 to 10 tubular SOFCs. It may be that there are from 1 to 10 tubular SOFCs. In one embodiment there are from 2 to 8 tubular SOFCs (such as from 2 to 6), or from 3 to 8 tubular SOFCs (such as from 3 to 6).

In one embodiment the tubular SOFC stack comprises 2 or 3 or 4 or 5 or 6 tubular solid oxide fuel cells.

In one embodiment each tubular SOFC comprises an inner electrode tube, an electrolyte layer coaxially surrounding the inner electrode, and an outer electrode layer coaxially surrounding the electrolyte layer, wherein one of the inner electrode tube and the outer electrode layer is an anode and the other is a cathode, and wherein each solid oxide fuel cell is electrically connected to an adjacent solid oxide fuel cell.

Preferably, the inner electrode tube is an anode and the outer electrode layer is a cathode.

It will be appreciated that the tubular solid oxide fuel cells in the stack should be electrically connected; for example they may be electrically connected tubular solid oxide fuel cells connected by interconnection wires. The recuperator may be integrated into this interconnection system.

In general, the recuperator may be integral with the tubular solid oxide fuel cell stack or may be separate from the tubular solid oxide fuel cell stack, provided that recuperator can be coupled with the tubular solid oxide fuel cell stack, with 50% or more of the length of the tubular solid oxide fuel cell stack being received within the coupling section of the recuperator.

Preferably, when there is more than one solid oxide fuel cell, the tubular solid oxide fuel cells are arranged such that gas can freely flow between them, therefore permitting a substantially uniform oxidant flow distribution to each of the solid oxide fuel cells. For example, they may be arranged with a spacing of 0.5mm or more between the fuel cells, such as 1mm or more or 2mm or more.

Each tubular solid oxide fuel cell may have any suitable dimensions. In one embodiment, each tubular solid oxide fuel cell has a length of from 5cm to 100cm, such as from 8cm to 80cm or from 10cm to 60cm.

In one embodiment the tubular solid oxide fuel cells are microtubular solid oxide fuel cells. In one preferred embodiment each tubular solid oxide fuel cell has a diameter of from 1 mm to 80 mm, such as from 1 mm to 50 mm or from 1 mm to 25 mm, such as from 1 mm to 15 mm. It may be that each tube has a diameter of from 2 mm to 50 mm, such as from 3 mm to 30 mm or from 4 mm to 25 mm.

In one embodiment each tubular solid oxide fuel cell has a diameter of from 1 mm to 10 mm.

The solid oxide fuel cell unit of the first aspect and the stackable solid oxide fuel cell unit of the second aspect each comprise a recuperator. The recuperator comprises an elongate body that extends from a first end to a second end, with a passageway running therethrough, said elongate body having an elongate axis and having an outer cross section with a substantially consistent size and shape from the first end to the second end. The passageway provides (a) a coupling section extending from the first end of the elongate body, within which the tubular solid oxide fuel cell stack can be received so as to couple the recuperator with the tubular solid oxide fuel cell stack, with the second ends of the fuel cell tubes being located within the coupling section, and (b) an exhaust gas channel extending from the second end of the elongate body, through which, in use, exhaust gas from the second ends of the fuel cell tubes can flow and can exit the recuperator at the second end.

The elongate body has an outer shape that comprises flat surfaces on its outer shape, e.g. it may have a cross section in the shape of a triangle or square or rectangle or pentagon or hexagon or octagon.

In one preferred embodiment the elongate body has an outer cross section in the shape of a square or rectangle. A square cross section is particularly preferred due to the fact that this can assist with regular stacking of the units.

The elongate body is made of an alloy or a metal. Preferably the elongate body is formed from stainless steel, titanium, or aluminium, or the like. In general, the skilled person will be aware of metals and alloys that are lightweight but sufficiently strong and heat resistant to be suitable for use as a recuperator.

In one embodiment, the elongate body has a length of from 5cm to 100cm, such as from 8cm to 100cm, or from 10cm to 100cm. It may be that the length of the elongate body is from 5cm to 80cm, such as from 5cm to 75cm, or from 5cm to 50cm.

In one embodiment, the elongate body has a length of from 10cm to 80cm, such as from 10cm to 75cm, or from 10cm to 50cm.

In one embodiment, the elongate body has a length equal to or greater than the length of the tubular solid oxide fuel cell stack.

In one embodiment the elongate body has a cross-sectional area of from 5 mm² to 100 mm², such as from 6 mm² to 80 mm², or from 8 mm² to 60 mm², or from 10 mm² to 50 mm².

It may be that the maximum diameter of the elongate body is from 2mm to 80 mm, or from 3 mm to 50 mm, or from 4 mm to 25 mm.

In one embodiment the elongate body has a length of from 5cm to 60cm (e.g. from 10cm to 40cm) and has a cross sectional area of from 10 mm² to 50 mm² (e.g. from 15 mm² to 40 mm²).

The passageway of the recuperator provides (a) a coupling section extending from the first end of the elongate body, within which the tubular solid oxide fuel cell stack is received, so that the recuperator is coupled with the tubular solid oxide fuel cell stack, with the second ends of the fuel cell tubes being located within the coupling section, and (b) an exhaust gas channel extending from the second end of the elongate body, through which, in use, exhaust gas from the second ends of the fuel cell tubes can flow and can exit the recuperator at the second end.

The proportion of the passageway that makes up the coupling section and the proportion that makes up the exhaust gas channel will depend on the extent to which the tubular solid oxide fuel cell stack extends into the passageway. In essence, the location of the second ends of the fuel cell tubes delineates the boundary between the coupling section and the exhaust gas channel.

In one embodiment, the coupling section has a length which is from 30% to 75% of the total length of the passageway, e.g. from 30% to 70% or from 30% or 65%. In one embodiment, the coupling section has a length which is from 30% to 60% of the total length of the passageway. It may be that the coupling section has a length which is from 35% to 60% of the total length of the passageway, e.g. from 35% to 55% or from 40% to 55% of the total length.

It is desirable that the coupling section is sufficiently long that it can receive enough length of the tubular solid oxide fuel cell stack so that there is a stable product with a robust connection. It is desirable that the coupling section is sufficiently long that it can receive enough length of the tubular solid oxide fuel cell stack so that enough of the overall outer length of the product is the recuperator, so that there is a stackable surface provided by the consistent outer surface of the recuperator.

In the present invention 50% or more of the length of the tubular solid oxide fuel cell stack is received within the coupling section of the recuperator. In one embodiment, 55% or more of the length of the tubular solid oxide fuel cell stack is received within the coupling section of the recuperator, such as 60% or more, or 65% or more, or 70% or more, or 75% or more, or 80% or more. It may even be that 85% or more of the length of the tubular solid oxide fuel cell stack is received within the coupling section of the recuperator, such as 90% or more, or 95% or more.

Preferably there is a proportion of the length of the tubular solid oxide fuel cell stack that is not received within the coupling section of the recuperator, as this can aid connection of the first ends of the fuel cell tubes to a source of fuel. For example, it may be that no more than 95% of the length of the tubular solid oxide fuel cell stack is received within the coupling section of the recuperator, e.g. no more than 90% or no more than 85%.

In one embodiment, from 50% to 95% of the length of the tubular solid oxide fuel cell stack is received within the coupling section of the recuperator, such as from 50% to 90% or from 50% to 85% or from 50% to 80%. It may be that from 60% to 95% of the length of the tubular solid oxide fuel cell stack is received within the coupling section of the recuperator, such as from 60% to 90% or from 60% to 85% or from 60% to 80%.

The solid oxide fuel cell unit of the first aspect and the stackable solid oxide fuel cell unit of the second aspect each may optionally comprise a catalyst. A catalyst may be enclosed within the passageway. For example, a catalyst may be provided within the passageway at or near to the location (in use) of the second ends of the fuel cell tubes.

In one embodiment the catalyst is provided within the passageway and extends across most, substantially all, or all, of the cross sectional area of the passageway.

The catalyst may have a depth such that it extends for any suitable distance along the length of the passageway, e.g. 2mm or more, such as 5mm or more, or 10mm or more. In one embodiment the depth is from 2mm to 50mm.

In one embodiment, the catalyst is provided such that, in use, it is in contact with the second ends of the fuel cell tubes or is only a short distance from the second ends of the fuel cell tubes (e.g. 5mm or less, such as 2mm or less or 1mm or less). Thus, in use, the exhaust gas generated by the SOFC can pass through the catalyst before travelling along the exhaust gas channel and exiting the recuperator at the second.

A catalyst may, in one embodiment, be attached to one end of the tubular SOFC stack, for example it may be attached to the second end(s) of the fuel cell tube(s).

When there is more than one solid oxide fuel cell tube, it may be that these solid oxide fuel cell tubes are joined together at one end with a catalyst. For example, catalyst may be provided at the second ends of the fuel cell tubes and these ends may be joined together by said catalyst.

In one embodiment the catalyst is suitable for the combustion of the exhaust gas from the SOFC stack. It may be that the catalyst comprises platinum, rhodium or other precious metals, or mixtures of precious metals, nickel molybdate or cobalt molybdate.

The solid oxide fuel cell unit of the first aspect and the stackable solid oxide fuel cell unit of the second aspect each may optionally comprise an insulating chamber contained inside the exhaust gas channel.The insulating chamber may be made of thermally insulating fibers or gel materials or the like.

A key feature of the invention is that the tubular solid oxide fuel cell stack is received within the coupling section of the recuperator, with the elongate axis of the tubular solid oxide fuel cell stack aligned with the elongate axis of the recuperator, such that a stackable solid oxide fuel cell unit can be formed in which the recuperator is coupled with the tubular solid oxide fuel cell stack.

The tubular solid oxide fuel cell stack may be received within the coupling section of the recuperator with a close fit, i.e. the diameter of the coupling section may be the same as or slightly greater than the external diameter of tubular solid oxide fuel cell stack.

The tubular solid oxide fuel cell stack may be received within the coupling section of the recuperator with a fit such that a channel is created between the coupling section and the stack, i.e. the diameter of the coupling section may be greater than the external diameter of tubular solid oxide fuel cell stack by more than a minimal amount, e.g. by 2mm or more, such as 5mm or more or even 10mm or more.

In one embodiment, therefore, the diameter of the coupling section may be greater than the external diameter of tubular solid oxide fuel cell stack by such an amount that when the tubular solid oxide fuel cell stack is received within the coupling section, the space between the interior surface of the coupling section and the exterior surface of the tubular solid oxide fuel cell stack forms a flow channel through which an oxidant gas to flow. In one embodiment the oxidant gas is air.

In one embodiment, there is a flow channel through which an oxidant gas can flow that is 1mm in diameter or more, e.g. 2mm in diameter or more, such as from 2mm to 5mm in diameter or more.

The flow channel therefore allows oxidant gas to contact the solid oxide fuel cell tubes.

The solid oxide fuel cell unit of the first aspect and the stackable solid oxide fuel cell unit of the second aspect each may optionally comprise an inlet manifold. The inlet manifold supplies fuel gas into the interior of each tubular solid oxide fuel cell forming the stack.

In one embodiment the inlet manifold supplies fuel gas to the inside anode layer of the tubular solid oxide fuel cells.

In one embodiment the inlet manifold is further connected to a fuel gas supply source.

The fuel gas may comprise gases such as hydrogen, carbon monoxide, hydrocarbons (e.g. methane, propane) or mixtures thereof. It may alternatively be air.

For example, the fuel gas may be stored in a tank and, in use, pumped to the inlet manifold which in turn injects the fuel into the SOFCs.

The SOFC tubes are therefore, in use, fed with fuel gas from the manifold. The rate of supply may be controlled by a valve.

The gas inlet will be cold when compared to the region where the fuel cells operate, which is normally about 700 degrees Celsius during operation. Therefore in one embodiment a thermally insulating layer is used to separate the gas inlet from the fuel cell stack.

The thermally insulating layer may, for example, be formed of thermally insulating fibers or gel materials. In one embodiment the thermally insulating layer comprises Saffil fiber board, silica nanoparticles or vacuum insulation.

The invention also provides a stacked solid fuel cell system comprising two or more stackable solid oxide fuel cell units according to the second aspect.

Preferably in the third aspect the stackable solid oxide fuel cell units of the second aspect are stacked with their elongate axes aligned.

There may, for example, be from two to 100, or even more, of the stackable solid oxide fuel cell units stacked together. In one embodiment there are from two to 50, or from 4 to 30, or from 6 to 25 or from 8 to 20 of the stackable solid oxide fuel cell units stacked together. In one embodiment there are from two to 30, or from 4 to 20, of the stackable solid oxide fuel cell units stacked together.

In one embodiment there is an even number of the stackable solid oxide fuel cell units stacked together. This can be beneficial in terms of efficient use of space, which is important for portable devices. In one embodiment there is a square number (y²) of the stackable solid oxide fuel cell units stacked together, such that they can be stacked in a y x y configuration.

The stacked solid fuel cell system may optionally comprise a fuel gas plenum.

The fuel gas plenum acts to connect all the fuel cell tubes to the fuel supply. Thus the fuel gas plenum supplies fuel gas into the interior of each tubular solid oxide fuel cell of the stacks. In one embodiment, a single plenum connects all the tubular SOFC stacks.

The stacked solid fuel cell system may comprise a container, such as an insulating container, within which the two or more stackable solid oxide fuel cell units are provided.

It is not necessary that the stackable solid oxide fuel cell units are provided within the container along their full length. Part of their length may be outside the container, e.g. the inlet manifold may be outside of the container, as may some of the length of the fuel cell stack.

The stacked solid fuel cell system may comprise an inlet that provides oxidant gas, e.g. air, into the system.

In one embodiment the inlet leads to an outer flow channel that is formed between the container and the recuperator. This means that oxidant gas, e.g. air, can flow from the outside of the product via the inlet, through the outer flow channel.

In the embodiment where there is a gap between the exterior surface of the tubular solid oxide fuel cell stack and the inner surface of the coupling section so as to provide a flow channel, it is preferred that the outer flow channel leads to this flow channel between the exterior surface of the tubular solid oxide fuel cell stack and the inner surface of the coupling section.

Therefore oxidant gas, e.g. air, can flow from the outside of the product via the inlet and the outer flow channel to said flow channel. As it flows through this channel it results in the oxidant gas contacting the solid oxide fuel cell tubes.

In one embodiment the stacked solid fuel cell system of the invention further comprises a heat exchanger. The heat exchanger may, for example, be attached to the recuperator. Heat can readily be utilised from the exhaust gases by such a heat exchanger.

Thus the stacked solid fuel cell system of the invention can be used to generate useable heat.

The stacked solid fuel cell system of the invention can, of course, be used to generate useable power.

### Description of the drawings

The invention will now be further described, by means of example only, with reference to the drawings in which:
**Figure 1** is a cross-sectional view of a stackable solid oxide fuel cell unit according to the invention
**Figure 2** is a cross-sectional view of a stacked solid fuel cell system according to the invention.

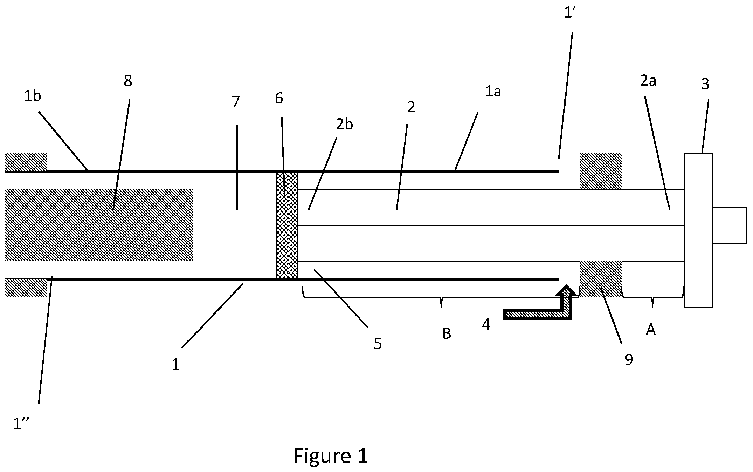

Figure 1 shows a stackable solid oxide fuel cell unit which comprise a tubular solid oxide fuel cell stack (2) and a recuperator (1).

The tubular solid oxide fuel cell stack (2) comprises one or more solid oxide fuel cell tubes, each fuel cell tube having a first end (2a) configured to receive a fuel gas and a second end (2b) configured to discharge an exhaust gas, said tubular solid oxide fuel cell stack having an elongate axis. In a preferred embodiment there are four solid fuel cell tubes, which are preferably arranged in a 2x2 formation with their elongate axes aligned.

The recuperator (1) comprises an elongate body that extends from a first end (1') to a second end (1"), with a passageway running therethrough, said elongate body having an elongate axis and having an outer cross section with a substantially consistent size and shape from the first end to the second end. In a preferred embodiment the cross section is square. The elongate body is suitably formed from stainless steel or another lightweight metal or alloy, e.g. titanium or aluminium.

The passageway provides a coupling section (1a) extending from the first end (1') of the elongate body, within which the tubular solid oxide fuel cell stack (2) is received so as to couple the recuperator with the tubular solid oxide fuel cell stack, with the second ends (2b) of the fuel cell tubes being located within the coupling section. The passageway also provides an exhaust gas channel (1b) extending from the second end (1") of the elongate body, through which, in use, exhaust gas from the second ends (2b) of the fuel cell tubes can flow and can exit the recuperator at the second end (1").

It can be seen that 50% or more (e.g. about 65%) of the length of the tubular solid oxide fuel cell stack (2) is received within the coupling section (1a) of the recuperator (1).

It can also be seen that the elongate axis of the tubular solid oxide fuel cell stack (2) is aligned with the elongate axis of the recuperator (1).

The first end (2a) of the cell stack (2) is connected to an inlet manifold (3) which injects fuel gas into the solid oxide fuel cell tubes. The inlet manifold (3) supplies fuel gas into the interior of each tubular solid oxide fuel cell.

It can be seen that there is a gap between the exterior surface of the tubular solid oxide fuel cell stack (2) and the inner surface of the coupling section (1a) so as to provide a flow channel (5). Oxidant gas (4), e.g. air, can flow from the outside of the product through said flow channel (5), thereby resulting in the oxidant gas contacting the solid oxide fuel cell tubes.

Exhaust gases leave the solid oxide fuel cell tubes at second end (2b). The second end (2b) is attached to a catalyst (6) such that the exhaust gases flow through said catalyst (6) before flowing along the exhaust gas channel (1b).

An insulating chamber (8) is provided within the exhaust gas channel (1b).

A thermally insulating barrier (9), e.g. made from Saffil polycrystalline insulating material, is provided to separate the cold region (A) of the solid oxide fuel cell stack, where, in use, the gas is injected via inlet manifold (3) and the hot region (B) of the solid oxide fuel cell stack, where the tubular solid oxide fuel cell stack (2) is, in use, operating at high temperature.

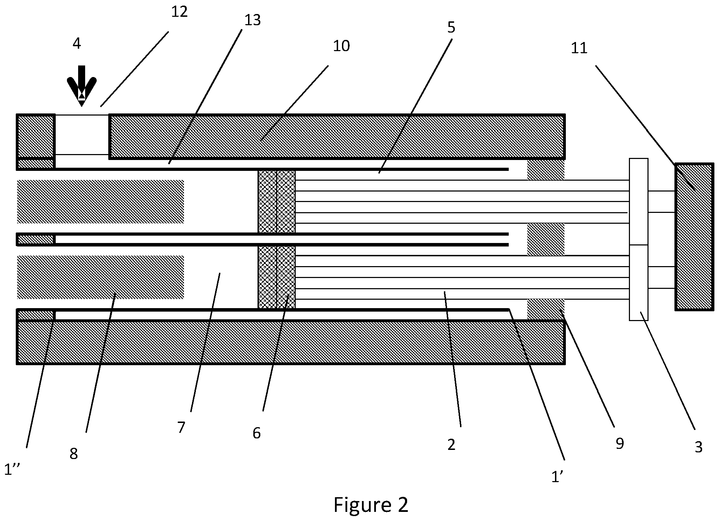

Figure 2 shows a stacked solid fuel cell system comprising two of the stackable solid oxide fuel cell units of the type as shown in Figure 1.

These stackable solid oxide fuel cell units are provided with their elongate axes aligned.

The stackable solid oxide fuel cell units are provided within an insulating container (10).

A fuel gas plenum (11) is provided which acts to connect all the fuel cell tubes to the fuel supply via the inlet manifold (3). Thus the fuel gas plenum (11) supplies fuel gas into the interior of each tubular solid oxide fuel cell of the stacks. The first end (2a) of each cell stack (2) is connected to this plenum (11).

An inlet (12) provides oxidant gas (4), e.g. air, into the system. The inlet (12) leads to an outer flow channel (13) that is formed between the insulating container (10) and the recuperator (1). This oxidant gas (4), e.g. air, flows from the outside of the product via the inlet (12), through the outer flow channel (13) and then reaches the flow channel (5). As noted above, the flow of the oxidant gas through the flow channel (5) means that the oxidant gas contacts the solid oxide fuel cell tubes.

The stacked solid fuel cell system may be used in combination with a heat exchanger, to recover heat from the exhaust gases that exit the recuperator. Heat can readily be utilised from the exhaust gases by such a heat exchanger.

The invention will now be further described, in a non limiting manner, by reference to the following example.

### Example 1:

A stacked solid fuel cell system as in Figure 2 was produced, having two stackable solid oxide fuel cell unit stacked together with their longitudinal axes aligned.

Each stackable solid oxide fuel cell unit contained a tubular solid fuel stack comprising four tubular solid oxide fuel cells in a 2x2 configuration and designed to provide 25W of electrical power. All the cells were 15 cm long, 6.5 mm in diameter and had 10 cm electrode length.

The elongate body of each recuperator was a 25mm² cross section box tube having a length of 30cm that was formed by folding a stainless steel sheet and forming a sealed seam.

The system gave satisfactory recuperation. Further, the system was lightweight and genuinely portable.

The power of the system was able to be increased by adding more stackable solid oxide fuel cell units. For example, a 2x2 array or a 3x2 array or a 2x3 array or a 3x3 array could be produced.

## Claims

1. A solid oxide fuel cell unit comprising:
a tubular solid oxide fuel cell stack comprising one or more solid oxide fuel cell tubes, each fuel cell tube having a first end configured to receive a fuel gas and a second end configured to discharge an exhaust gas, said tubular solid oxide fuel cell stack having an elongate axis, and
a recuperator comprising an elongate body that is made of an alloy or a metal, wherein said elongate body extends from a first end to a second end, with a passageway running therethrough, said elongate body having an elongate axis and having an outer cross section with a substantially consistent size and shape from the first end to the second end, wherein the elongate body has an outer shape that comprises flat surfaces on its outer shape and wherein the passageway provides (a) a coupling section extending from the first end of the elongate body, within which the tubular solid oxide fuel cell stack can be received so as to couple the recuperator with the tubular solid oxide fuel cell stack, with the second ends of the fuel cell tubes being located within the coupling section, and (b) an exhaust gas channel extending from the second end of the elongate body, through which, in use, exhaust gas from the second ends of the fuel cell tubes can flow and can exit the recuperator at the second end,
wherein 50% or more of the length of the tubular solid oxide fuel cell stack can be received within the coupling section of the recuperator,
wherein when the tubular solid oxide fuel cell stack is received within the coupling section of the recuperator, the elongate axis of the tubular solid oxide fuel cell stack is aligned with the elongate axis of the recuperator,
such that a stackable solid oxide fuel cell unit can be formed in which the recuperator is coupled with the tubular solid oxide fuel cell stack.

2. A stackable solid oxide fuel cell unit comprising:
a tubular solid oxide fuel cell stack comprising one or more solid oxide fuel cell tubes, each fuel cell tube having a first end configured to receive a fuel gas and a second end configured to discharge an exhaust gas, said tubular solid oxide fuel cell stack having an elongate axis, and
a recuperator comprising an elongate body that is made of an alloy or a metal, wherein said elongate body extends from a first end to a second end, with a passageway running therethrough, said elongate body having an elongate axis and having an outer cross section with a substantially consistent size and shape from the first end to the second end, wherein the elongate body has an outer shape that comprises flat surfaces on its outer shape and wherein the passageway provides (a) a coupling section extending from the first end of the elongate body, within which the tubular solid oxide fuel cell stack is received, so that the recuperator is coupled with the tubular solid oxide fuel cell stack, with the second ends of the fuel cell tubes being located within the coupling section, and (b) an exhaust gas channel extending from the second end of the elongate body, through which, in use, exhaust gas from the second ends of the fuel cell tubes can flow and can exit the recuperator at the second end,
wherein 50% or more of the length of the tubular solid oxide fuel cell stack is received within the coupling section of the recuperator, and
wherein the elongate axis of the tubular solid oxide fuel cell stack is aligned with the elongate axis of the recuperator.

3. A stacked solid fuel cell system comprising two or more stackable solid oxide fuel cell units according to claim 2.

4. The stacked solid fuel cell system of claim 3, wherein the stackable solid oxide fuel cell units are stacked with their elongate axes aligned.

5. The stacked solid fuel cell system of claim 3 or claim 4, wherein there are from two to 100 of the stackable solid oxide fuel cell units stacked together.

6. The stacked solid fuel cell system of any one of claims 3 to 5, wherein there is an even number of the stackable solid oxide fuel cell units stacked together.

7. The solid oxide fuel cell unit or the stackable solid oxide fuel cell unit of any one of the preceding claims, wherein there is more than one solid oxide fuel cell in the tubular solid oxide fuel cell stack and these solid oxide fuel cell tubes are longitudinally aligned with each other.

8. The solid oxide fuel cell unit or the stackable solid oxide fuel cell unit of any one of the preceding claims, wherein the tubular solid oxide fuel cells are microtubular solid oxide fuel cells, wherein each tubular solid oxide fuel cell has a diameter of from 1 mm to 25 mm.

9. The solid oxide fuel cell unit or the stackable solid oxide fuel cell unit of any one of the preceding claims, wherein the elongate body is formed from stainless steel, titanium, or aluminium.

10. The solid oxide fuel cell unit or the stackable solid oxide fuel cell unit of any one of the preceding claims, wherein the elongate body has a cross section in the shape of a triangle or square or rectangle or pentagon or hexagon or octagon.

11. The solid oxide fuel cell unit or the stackable solid oxide fuel cell unit of claim 10, wherein the elongate body has a cross section in the shape of a square or rectangle.

12. The solid oxide fuel cell unit or the stackable solid oxide fuel cell unit of any one of the preceding claims, wherein 55% or more of the length of the tubular solid oxide fuel cell stack is received within the coupling section of the recuperator in use.

13. The solid oxide fuel cell unit or the stackable solid oxide fuel cell unit of claim 12, wherein 75% or more of the length of the tubular solid oxide fuel cell stack is received within the coupling section of the recuperator in use.

14. The solid oxide fuel cell unit or the stackable solid oxide fuel cell unit of any one of the preceding claims, wherein no more than 95% of the length of the tubular solid oxide fuel cell stack is received within the coupling section of the recuperator.

15. The solid oxide fuel cell unit or the stackable solid oxide fuel cell unit of any one of the preceding claims, wherein the tubular solid oxide fuel cell stack is received within the coupling section of the recuperator with a fit such that a flow channel is created between the coupling section and the stack, through which an oxidant gas may flow during use.

## Patentansprüche

1. Festoxidbrennstoffzelleneinheit, umfassend:
einen röhrenförmigen Festoxidbrennstoffzellenstapel, der ein oder mehrere Festoxidbrennstoffzellenrohr(e) umfasst, wobei jedes Brennstoffzellenrohr ein erstes Ende aufweist, das konfiguriert ist, ein Brennstoffgas zu empfangen, und ein zweites Ende, das konfiguriert ist, ein Abgas abzuleiten, wobei der röhrenförmige Festoxidbrennstoffzellenstapel eine längliche Achse aufweist, und
einen Rekuperator, der einen länglichen Körper umfasst, der aus einer Legierung oder einem Metall hergestellt ist, wobei sich der längliche Körper von einem ersten Ende zu einem zweiten Ende erstreckt, mit einem Durchgang, der dadurch verläuft, wobei der längliche Körper eine längliche Achse aufweist und einen äußeren Querschnitt mit einer im Wesentlichen beständigen Größe und Form von dem ersten Ende zu dem zweiten Ende aufweist, wobei der längliche Körper eine äußere Form aufweist, die flache Flächen auf ihrer äußeren Form umfasst, und wobei der Durchgang bereitstellt: (a) einen Kopplungsabschnitt, der sich von dem ersten Ende des länglichen Körpers erstreckt, in dem der röhrenförmige Festoxidbrennstoffzellenstapel aufgenommen werden kann, um den Rekuperator mit dem röhrenförmigen Festoxidbrennstoffzellenstapel zu koppeln, wobei die zweiten Enden der Brennstoffzellenrohre sich innerhalb des Kopplungsabschnitts befinden, und (b) einen Abgaskanal, der sich von dem zweiten Ende des länglichen Körpers erstreckt, durch den bei Verwendung Abgas von den zweiten Enden der Brennstoffzellenrohre fließen kann und den Rekuperator an dem zweiten Ende verlassen kann,
wobei 50% oder mehr der Länge des röhrenförmigen Festoxidbrennstoffzellenstapels innerhalb des Kopplungsabschnitts des Rekuperators aufgenommen werden kann,
wobei, wenn der röhrenförmige Festoxidbrennstoffzellenstapel innerhalb des Kopplungsabschnitts des Rekuperators aufgenommen wird, die längliche Achse des röhrenförmigen Festoxidbrennstoffzellenstapels auf die längliche Achse des Rekuperators derart ausgerichtet ist,
dass eine stapelbare Festoxidbrennstoffzelleneinheit gebildet werden kann, in der der Rekuperator mit dem röhrenförmigen Festoxidbrennstoffzellenstapel gekoppelt ist.

2. Stapelbare Festoxidbrennstoffzelleneinheit, umfassend:
einen röhrenförmigen Festoxidbrennstoffzellenstapel, der ein oder mehrere Festoxidbrennstoffzellenrohr(e) umfasst, wobei jedes Brennstoffzellenrohr ein erstes Ende aufweist, das konfiguriert ist, ein Brennstoffgas zu empfangen, und ein zweites Ende, das konfiguriert ist, ein Abgas abzuleiten, wobei der röhrenförmige Festoxidbrennstoffzellenstapel eine längliche Achse aufweist, und
einen Rekuperator, der einen länglichen Körper umfasst, der aus einer Legierung oder einem Metall hergestellt ist, wobei sich der längliche Körper von einem ersten Ende zu einem zweiten Ende erstreckt, mit einem Durchgang, der dadurch verläuft, wobei der längliche Körper eine längliche Achse aufweist und einen äußeren Querschnitt mit einer im Wesentlichen beständigen Größe und Form von dem ersten Ende zu dem zweiten Ende aufweist, wobei der längliche Körper eine äußere Form aufweist, die flache Flächen auf ihrer äußeren Form umfasst, und wobei der Durchgang bereitstellt (a) einen Kopplungsabschnitt, der sich von dem ersten Ende des länglichen Körpers erstreckt, in dem der röhrenförmige Festoxidbrennstoffzellenstapel aufgenommen werden kann, so dass der Rekuperator mit dem röhrenförmigen Festoxidbrennstoffzellenstapel gekoppelt ist, wobei die zweiten Enden der Brennstoffzellenrohre sich innerhalb des Kopplungsabschnitts befinden, und (b) einen Abgaskanal, der sich von dem zweiten Ende des länglichen Körpers erstreckt, durch den bei Verwendung Abgas von den zweiten Enden der Brennstoffzellenrohre fließen kann und den Rekuperator an dem zweiten Ende verlassen kann,
wobei 50% oder mehr der Länge des röhrenförmigen Festoxidbrennstoffzellenstapels innerhalb des Kopplungsabschnitts des Rekuperators aufgenommen wird, und
wobei die längliche Achse des röhrenförmigen Festoxidbrennstoffzellenstapels auf die längliche Achse des Rekuperators ausgerichtet ist.

3. Gestapeltes Festbrennstoffzellensystem, das zwei oder mehr stapelbare Festoxidbrennstoffzelleneinheiten nach Anspruch 2 umfasst.

4. Gestapeltes Festbrennstoffzellensystem nach Anspruch 3, wobei die stapelbaren Festoxidbrennstoffzelleneinheiten auf ihre länglichen Achsen ausgerichtet gestapelt sind.

5. Gestapeltes Festbrennstoffzellensystem nach Anspruch 3 oder Anspruch 4, wobei es von zwei bis 100 der stapelbaren Festoxidbrennstoffzelleneinheiten, die zusammengestapelt sind, gibt.

6. Gestapeltes Festbrennstoffzellensystem nach einem der Ansprüche 3 bis 5, wobei es eine gerade Anzahl der stapelbaren Festoxidbrennstoffzelleneinheiten, die zusammengestapelt sind, gibt.

7. Festoxidbrennstoffzelleneinheit oder stapelbare Festoxidbrennstoffzelleneinheit nach einem der vorstehenden Ansprüche, wobei es mehr als eine Festoxidbrennstoffzelle in dem röhrenförmigen Festoxidbrennstoffzellenstapel gibt, und diese Festoxidbrennstoffzellenrohre längs zueinander ausgerichtet sind.

8. Festoxidbrennstoffzelleneinheit oder stapelbare Festoxidbrennstoffzelleneinheit nach einem der vorstehenden Ansprüche, wobei die röhrenförmigen Festoxidbrennstoffzellen mikroröhrenförmige Festoxidbrennstoffzellen sind, wobei jede röhrenförmige Festoxidbrennstoffzelle einen Durchmesser von 1 mm bis 25 mm aufweist.

9. Festoxidbrennstoffzelleneinheit oder stapelbare Festoxidbrennstoffzelleneinheit nach einem der vorstehenden Ansprüche, wobei der längliche Körper aus Edelstahl, Titan oder Aluminium gebildet ist.

10. Festoxidbrennstoffzelleneinheit oder stapelbare Festoxidbrennstoffzelleneinheit nach einem der vorstehenden Ansprüche, wobei der längliche Körper einen Querschnitt in der Form eines Dreiecks oder Quadrats oder Rechtecks oder Fünfecks oder Sechsecks oder Achtecks aufweist.

11. Festoxidbrennstoffzelleneinheit oder stapelbare Festoxidbrennstoffzelleneinheit nach Anspruch 10, wobei der längliche Körper einen Querschnitt in der Form eines Quadrats oder Rechtecks aufweist.

12. Festoxidbrennstoffzelleneinheit oder stapelbare Festoxidbrennstoffzelleneinheit nach einem der vorstehenden Ansprüche, wobei 55 % oder mehr der Länge des röhrenförmigen Festoxidbrennstoffzellenstapels bei Verwendung innerhalb des Kopplungsabschnitts des Rekuperators aufgenommen wird.

13. Festoxidbrennstoffzelleneinheit oder stapelbare Festoxidbrennstoffzelleneinheit nach Anspruch 12, wobei 75 % oder mehr der Länge des röhrenförmigen Festoxidbrennstoffzellenstapels bei Verwendung innerhalb des Kopplungsabschnitts des Rekuperators aufgenommen wird.

14. Festoxidbrennstoffzelleneinheit oder stapelbare Festoxidbrennstoffzelleneinheit nach einem der vorstehenden Ansprüche, wobei nicht mehr als 95 % der Länge des röhrenförmigen Festoxidbrennstoffzellenstapels innerhalb des Kopplungsabschnitts des Rekuperators aufgenommen wird.

15. Festoxidbrennstoffzelleneinheit oder stapelbare Festoxidbrennstoffzelleneinheit nach einem der vorstehenden Ansprüche, wobei der röhrenförmige Festoxidbrennstoffzellenstapel innerhalb des Kopplungsabschnitts des Rekuperators mit einer Passung derart aufgenommen wird, dass ein Flusskanal zwischen dem Kopplungsabschnitt und dem Stapel erzeugt wird, durch den ein Oxidationsgas während der Verwendung fließen kann.

## Revendications

1. Unité de pile à combustible à oxyde solide comprenant :
un empilement de cellules à combustible à oxyde solide tubulaires comprenant une ou plusieurs cellules à combustible tubulaires, chaque cellule à combustible tubulaire ayant une première extrémité configurée pour recevoir un gaz combustible et une deuxième extrémité configurée pour expulser un gaz d'échappement, ledit empilement de cellules à combustible à oxyde solide tubulaires ayant un axe allongé, et
un récupérateur comprenant un corps allongé qui est fait d'un alliage ou d'un métal, dans lequel ledit corps allongé s'étend de la première extrémité à la deuxième extrémité, avec une voie de passage le traversant, ledit corps allongé ayant un axe allongé et ayant une section transversale extérieure d'une taille et d'une forme essentiellement constantes de la première extrémité à la deuxième extrémité, dans lequel le corps allongé a une forme extérieure qui comprend des surfaces plates sur sa forme extérieure et dans lequel la voie de passage fournit (a) une section de couplage s'étendant de la première extrémité du corps allongé, dans laquelle l'empilement de cellules à combustible à oxyde solide tubulaires peut être reçu de façon à coupler le récupérateur à l'empilement de cellules à combustible à oxyde solide tubulaires, les deuxièmes extrémités des cellules à combustible tubulaires étant situées dans la section de couplage, et (b) un canal de gaz d'échappement s'étendant de la deuxième extrémité du corps allongé, à travers lequel, en fonctionnement, le gaz d'échappement des deuxièmes extrémités des cellules à combustible tubulaires peut sortir du récupérateur à la deuxième extrémité,
dans laquelle 50 % ou plus de la longueur de l'empilement de cellules à combustible à oxyde solide tubulaires peuvent être reçus dans la section de couplage du récupérateur,
dans laquelle, lorsque l'empilement de cellules à combustible à oxyde solide tubulaires est reçu dans la section de couplage du récupérateur, l'axe allongé de l'empilement de cellules à combustible à oxyde solide tubulaires est aligné avec l'axe allongé du récupérateur,
de sorte qu'une unité de pile à combustible solide empilable peut être formée dans laquelle le récupérateur est couplé à l'empilement de cellules à combustible à oxyde solide tubulaires.

2. Unité de pile à combustible à oxyde solide empilable comprenant :
un empilement de cellules à combustible à oxyde solide tubulaires comprenant une ou plusieurs cellules à combustible tubulaires, chaque cellule à combustible tubulaire ayant une première extrémité configurée pour recevoir un gaz combustible et une deuxième extrémité configurée pour expulser un gaz d'échappement, ledit empilement de cellules à combustible à oxyde solide tubulaires ayant un axe allongé, et
un récupérateur comprenant un corps allongé qui est fait d'un alliage ou d'un métal, dans lequel ledit corps allongé s'étend de la première extrémité à la deuxième extrémité, avec une voie de passage le traversant, ledit corps allongé ayant un axe allongé et ayant une section transversale extérieure d'une taille et d'une forme essentiellement constantes de la première extrémité à la deuxième extrémité, dans lequel le corps allongé a une forme extérieure qui comprend des surfaces plates sur sa forme extérieure et dans lequel la voie de passage fournit (a) une section de couplage s'étendant de la première extrémité du corps allongé, dans laquelle l'empilement de cellules à combustible à oxyde solide tubulaires peut être reçu de façon à coupler le récupérateur à l'empilement de cellules à combustible à oxyde solide tubulaires, les deuxièmes extrémités des cellules à combustible tubulaires étant situées dans la section de couplage, et (b) un canal de gaz d'échappement s'étendant de la deuxième extrémité du corps allongé, à travers lequel, en fonctionnement, le gaz d'échappement des deuxièmes extrémités des cellules à combustible tubulaires peut sortir du récupérateur à la deuxième extrémité,
dans laquelle 50 % ou plus de la longueur de l'empilement de cellules à combustible à oxyde solide tubulaires peuvent être reçus dans la section de couplage du récupérateur,
dans laquelle, lorsque l'empilement de cellules à combustible à oxyde solide tubulaires est reçu dans la section de couplage du récupérateur.

3. Système de pile à combustible solide empilé comprenant deux ou plusieurs unités de pile à combustible à oxyde solide empilables selon la revendication 2.

4. Système de pile à combustible solide empilé selon la revendication 3, dans lequel les unités de pile à combustible à l'oxyde solide empilables sont empilées avec leurs axes longitudinaux alignés.

5. Système de pile à combustible solide empilé selon la revendication 3 ou la revendication 4, dans lequel il y a de deux à 100 unités de pile à combustible à oxyde solide empilables empilées ensemble.

6. Système de pile à combustible solide empilé selon l'une quelconque des revendications 3 à 5, dans lequel il y a un nombre pair d'unités de pile à combustible à oxyde solide empilables empilées ensemble.

7. Unité de pile à combustible à oxyde solide ou unité de pile à combustible à oxyde solide empilable selon l'une quelconque des revendications précédentes, dans laquelle il y a plus d'une cellule à combustible à oxyde solide dans l'empilement de cellules à combustible à oxyde solide tubulaires et ces cellules à combustible à oxyde solide tubulaires sont alignés longitudinalement entre elles.

8. Unité de pile à combustible à oxyde solide ou unité de pile à combustible à oxyde solide empilable selon l'une quelconque des revendications précédentes, dans laquelle les cellules à combustible à oxyde solide tubulaires sont des cellules à combustible à oxyde solide micro-tubulaires, dans laquelle chaque cellule à combustible à oxyde solide tubulaire a un diamètre de 1 mm à 25 mm.

9. Unité de pile à combustible à oxyde solide ou unité de pile à combustible à oxyde solide empilable selon l'une quelconque des revendications précédentes, dans laquelle le corps allongé est formé en acier inoxydable, en titane ou en aluminium.

10. Unité de pile à combustible à oxyde solide ou unité de pile à combustible à oxyde solide empilable selon l'une quelconque des revendications précédentes, dans laquelle le corps allongé a une section transversale en forme de triangle, de carré, de rectangle, de pentagone, d'hexagone ou d'octogone.

11. Unité de pile à combustible à oxyde solide ou unité de pile à combustible à oxyde solide empilable selon le revendication 10, dans laquelle le corps allongé a une section transversale en forme de carré ou de rectangle.

12. Unité de pile à combustible à oxyde solide ou unité de pile à combustible à oxyde solide empilable selon l'une quelconque des revendications précédentes, dans laquelle 55 % ou plus de la longueur de l'empilement de cellules à combustible à oxyde solide tubulaires sont reçus dans la section de couplage du récupérateur en fonctionnement.

13. Unité de pile à combustible à oxyde solide ou unité de pile à combustible à oxyde solide empilable selon la revendication 12, dans laquelle 75 % ou plus de la longueur de l'empilement de cellules à combustible à oxyde solide tubulaires sont reçus dans la section de couplage du récupérateur en fonctionnement.

14. Unité de pile à combustible à oxyde solide ou unité de pile à combustible à oxyde solide empilable selon l'une quelconque des revendications précédentes, dans laquelle pas plus de 95 % de la longueur de l'empilement de cellules à combustible à oxyde solide tubulaires ne sont reçus dans la section de couplage du récupérateur.

15. Unité de pile à combustible à oxyde solide ou unité de pile à combustible à oxyde solide empilable selon l'une quelconque des revendications précédentes, dans laquelle l'empilement de cellules à combustible à oxyde solide tubulaires est reçu dans la section de couplage du récupérateur avec un ajustement tel qu'un canal d'écoulement est créé entre la section de couplage et l'empilement, à travers lequel un gaz oxydant peut s'écouler en fonctionnement.
